Europäisches Patentamt

European Patent Office

Office européen des brevets

(19)

(11) **EP 1 455 430 A2**

(12) **EUROPEAN PATENT APPLICATION**

(43) Date of publication:
    **08.09.2004 Bulletin 2004/37**

(51) Int Cl.⁷: **H02H 7/08**

(21) Application number: **04425128.8**

(22) Date of filing: **27.02.2004**

(84) Designated Contracting States:
    **AT BE BG CH CY CZ DE DK EE ES FI FR GB GR
    HU IE IT LI LU MC NL PT RO SE SI SK TR**
    Designated Extension States:
    **AL HR LT LV MK**

(30) Priority: **03.03.2003 IT tv20030012 U**

(71) Applicant: **Fairwind Electronics S.r.L.
    31047 Ponte di Piave (TV) (IT)**

(72) Inventor: **Loro, Cristiano
    30030 Trivignano (VE) (IT)**

(54) **Device for the protection of a non-synchronized engine against idle running**

(57)    The present request has for object an electronic device capable of protecting a non synchronized engine against idle running.

This device contains integrated circuits that square signals proportional to the tension that supplies the engine, and of the current absorbed by it. From the reciprocal position of the commutation front of these signals the working condition of the engine is recognized.

If the condition corresponds to an absence of loading, the engine switches off otherwise it stays on.

figure 3

Printed by Jouve, 75001 PARIS (FR)

EP 1 455 430 A2

**Description**

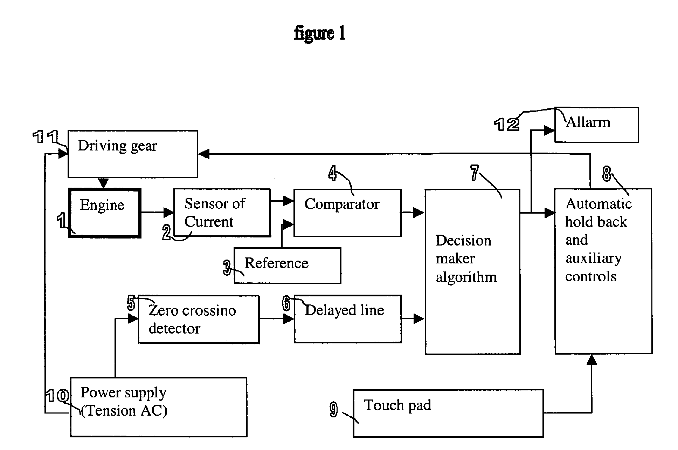

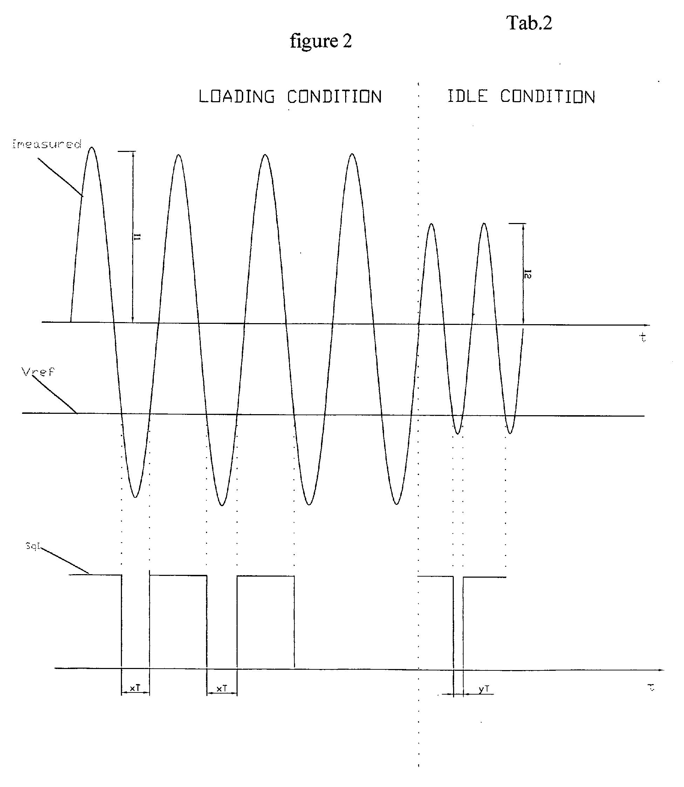

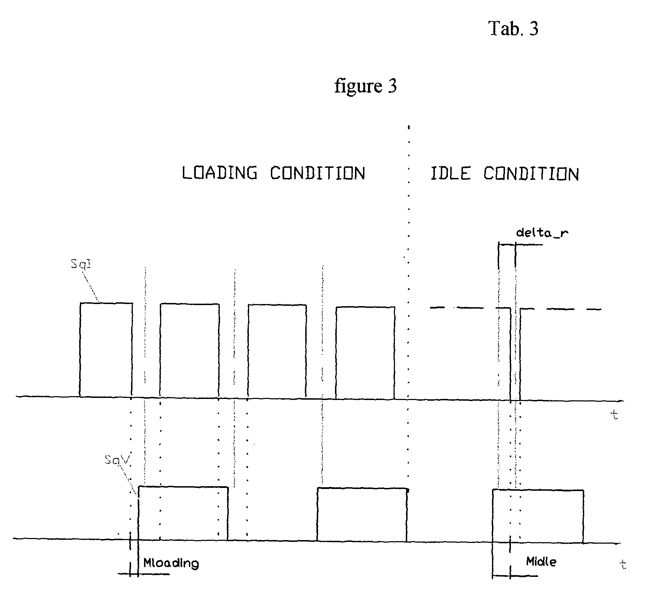

**[0001]** The present request has for object a device capable to protect an asynchronous engine against idle running without a braking torque adequate to the power of the engine. Electric engines, for various reasons can function under the conditions of absence of a braking torque; for example the transmission mover that connects the engine to other mechanical devices could become damaged, or the case of a pump connected to a tank that for some reasons remains completely empty (a frequent case is that of the pumps used to decant wine). The pump working in these conditions could be damaged and become dangerous. Known devices suitable for the protection of electric engines working without a braking torque foresee the use of a sensor or of a suitable transducer according to the type of process of which the engine is part, in order to determine the overall state of the system, and to manage if it is the case, the presence of possible anomalies. For example, in the case of pumps, sensors of level and of pressure are utilized, if the working conditions are not satisfied the driving gear of the pump is disconnected. With this known solution there is the disadvantage to sustain the costs of the sensors and of their assemblage. Also known are other protection devices (patent n° GB 2008873) that prevents idle running by determining the irregular conditions elaborated by a proportional signal to the derivative current absorbed by the engine. This expedient has the disadvantage to detect only the sudden variations of current input; if the engine is connected to a pump, itself connected to a tank that is slowly empting, or in general, if the device utilising the mechanical power supplied by the engine is such as to generate a slow and gradual acceleration, it could happen that the system will not recognise this anomalous situation. Another protection device (patent n° JP. 54010951), that prevents idle running by determining irregular conditions by processing a signal proportional to the peak value of the absorbed current by the engine. This expedient has the disadvantage that requires a regulation (see the trimmer connected to the signal sender of the transistor PNP) and it is more expensive; beside that the regulation of such limits is tied up to the power of the engine: with equal conditions, the more powerful is the engine, and more will be the current absorbed because of a bigger inductive component. The limits just stated become heavy for an industrial production of such devices, because it is necessary to diversify according to the different power of the engine. The main objective of what is the subject of the present request is to exceed the intrinsic limit present on the solutions that are part of the known technology, and therefore, to determine a device capable to protect engines against idle running, that is easy to prepare and install in the application, with the minimum of connections; therefore, the objective is to avoid the use of sensors that survey the state of the system. Another important target is to guarantee the sure and prompt intervention of the device when the anomalous condition of absence of loading intervenes. Another important aim is to be able to use the device, object of the present request, for a wider range of values of nominal power of the engines that can be connected to it, without the need to carry out regulations with trimmer and other techniques. In this way the final user is not asked to choose the device suitable for his application and he is not obliged to have a particular knowledge in the technical field to operate any adjustments. The aims illustrated above can be reached through a device that detects the current absorbed by the engine and realizes a processing which is more convenient than the one reached with the known technique. The enclosed tables show the functioning of the device object of the present request, in particular: Figure 1 of table 1, represents in blocks a general outline as a whole of which the device is composed of. Figure 2 of table 2 represents the shapes of the wave present at the exit of some blocks of fgure1 under the conditions of loading and not, in order to make clear the functioning of the device. Figure 3 of table 3 represents a signal, also present in figure 2, in relation to another signal coming from another of the functional blocks of figure 1 under the same conditions of loading and not of figure 2. The meaning of the figures, of the blocks and of the signals present in figure 1, 2, and 3 will become obvious during this description. To understand the functioning of the device it is important to remember that the passage from a condition of major braking, to a condition of minor braking, the current absorbed by the engine will tend to diminish in width and to displace the phase compared to the tension that feeds it. With reference to figure 1, the block indicated with 1, represents the engine on which the protection against idle running is done. The engine can be either mono-phase or multi-phase with the appropriate changes to the circuit that are not binding in relation to the invention concept. Block 2, represents a sensor that recognises a signal proportional to the current absorbed by engine 1, such signal is indicated as Imeasured in figure 2 . This block in practice, can be substituted from different devices, such as, amperometric transformer shunt, sensors with hall effects; the choice of the device being used, is not binding with the invention concept, and therefore a more opportune choice can be available according to costs, availability or others. It is important to point out that the sensor can be integrated in the device, and therefore does not need extra connections from the final user, like it was also true for the solutions elaborated from the known technique. Block 3, represents a block that at his exit supplies a constant voltage reference, indicated as Vref in figure2. Block 4, is a comparator whose entries are the Imeasured signal coming from block 2, and Vref signal coming from block 3. The signal coming from block 4 is indicated as Sqi in figures 2 and 3. In particular, figure 2 illustrates the behaviour of block 4 in relation to two different peak values of Imeasured, equal to I1 and I2. It is possible to observe how the period where the wave Sqi is at zero changes: with I1 major to I2 this period changes from a value xT to a value yT, with xT superior to yT.

**[0002]** Therefore the effect is to obtain rising and falling edge on which the position varies according to Imeasured current. The quantity Z(I), defined as the period on which Sqi is at zero is equal to:

$$Z(Imeasured)=2*arcos\ (Vref/Imeasured)/(100*Pgreco)\ [s].$$

[0003]    In particular it will be Z (I1)=xT and Z (I2)=yT. The rising edges will move compared to the peak negative value of the Imeasured of a quantity equal to half of Z(I), therefore such quantity has the same tendency course of Z(I). It is a monotonous rising function that increases asymptotically at 10ms at the rising of Imeasured, it means that for the values of Imeasured enough superior to Vref, the value of Z(Imeasured) will be more or less constant. It also means that regulating Vref, with the conditions of engine under loading, the value of Z(Imeasured) will be constant with good approximation even substituting, with equal conditions, engines with different nominal power; this was one of the principal objectives described in the present request. Whereas if the conditions tend to bring the engine to idle running Z (Imeasured) vanish with more or less speed according to the nominal power of the engine, but as it will be demonstrated later on, the effects of the variation of the power factor will compensates such shifting. Block 5 detects the zero crossing of the alternate tension that feeds engine 1; the signal coming out of this block is a square wave with the same phase of the tension coming from block 10. Block 5 could also easily detect different values from the passing to zero to compensate the effects of the variation of tension coming from block 10 on the values of current absorbed by engine 1. Block 6 represents a delayed line and report the signal coming from block 5 with a constant delay of phase. The exit of block 6 is indicated as Sqv in figure 3 if it has been chosen to use, in block 5, a duty cycle of 50%. Figure 3 shows the effects of the variation of phase that is correlated to the variation of the current of Imeasured. The falling edge of the signal Sqi moves from an initial condition of anticipation to a delayed condition compared to Sqv rising edge changing from a loading condition to an idle condition. The symmetric axis reported in the same figure, represent the temporal positions where the negative peaks of Imeasured fall. Notice again in figure 3 the variation of phase indicated with delta_r measured, in the axe of the negative peak of Imeasured that would have been there in a condition of loading and of the effective one in an idle condition. To come to the point, the variation of the position of the falling edge of Sqi is increased of a quantity delta_r widening the margins of decision in order to discern the idle state from the one of loading and vice versa. Block 7 elaborates on the basic characteristic of the two incoming signals and allows discerning the working conditions of the engine, loaded or idle, supplying it at the exit with a logic value, high or low, depending on the condition of work present. Starting from the signals Sqi and Sqv, block 7 can detect the state of the system in different ways: for example, it can sample the signal Sqi on the rising fronts of the Sqv signal, observing figure 3 it is noticeable that on the condition of loading, samples of low values are detected, while in idle condition the samples are of high value. Alternately, it is also possible to measure the values of anticipation and delay between the rising front Sqv and the descent front Sqi, indicated in figure 3 as Mloading and Midle and on the base of such values, make a decision; these or other variations of block 7 are also part of the same inventive concept. Block 8 allows the final user to switch the engine on or off, by mean of an touch pad (see block 9), keeps memory of the state of the system, letting the engine (block 1) to continue in the conditions of motion or of pause (engine stopped). If the signal coming from block 7 is at the level defined for the idle condition, block 8 resets itself switching off the engine 1 through block 11, that opens the existing connection between the power supply 10 and the engine 1. Therefore, in the idle condition , any intervention attempted by the user by mean of the touch pad 9 will not be accepted. Block 8 can perform many various functions, for example, a timer that switches off the engine after a set time, fixed after the engine has been switched on. Block 11 is a power device, such as, for example, a relay, a triac or other components that start from a signal characterised by low current (in this case coming from block 8) allows to put in communication two contacts, getting higher current in circulation. The choice of which component to use in order to absolve the functions of block 11 is not binding to the purpose of the invention concept and could be the most pertinent according to costs, availability or other factors. Block 12 is an alarm system that can be acoustic or of a light source, that warns if any anomalies have been found, interpreted according to the exit state of block 7. Block 8 or block 12, or both of them can be left out, and make the signal coming from block 7 to go directly to block 11. Other variations could derive from the choice to elaborate the signal, or part of it in a digital form with the help of a digital converter or with the help of microprocessors with integrated comparators. These again are variations that are part of the same invention.

**Claims**

1.    Electronic device able to protect an asynchronous engine against idle running. Such a device is composed of a circuit that squares proportional signals to the tension sent to supply the engine and of the current absorbed by it. From the reciprocal position of the fronts of commutation of such squared waves, the working condition of the engine is assessed: if such condition corresponds to an absence of loading, the engine is switched off, otherwise it remains on.

2. Device according to claim 1, that in alternative or in combination to the switching off of the engine signals the condition of idle running of the engine by mean of an acoustic or light system.

3. Same device according claim 1 and 2, that does the same elaborations, or part of these in a digital form, using a component capable to carry out logical and-or numerical calculations.

4. Same device as claims 1 to 3. includes auxiliary functions against idle running, such as ,for example, the function of time out, or of a circuit connectable to a touch pad, to allow the user to operate the engine.

5. Same device as claims 1 to 4 that is **characterised by** this description and illustrated on the enclosed tables and figures.

figure 1

figure 2                                Tab.2

LOADING CONDITION        IDLE CONDITION

Imeasured

Vref

Sqi

Tab. 3

figure 3

LOADING CONDITION : IDLE CONDITION

SqI

SqV

delta_r

Mloading

Midle